# EUROPÄISCHE PATENTSCHRIFT

(11) **EP 2 475 569 B1**
(45) Veröffentlichungstag und Bekanntmachung des Hinweises auf die Patenterteilung: **20.11.2013**
(21) Anmeldenummer: 10740653.0
(22) Anmeldetag: 06.08.2010
(51) Int. Cl.: B62D 21/11

(54) **VORDERACHSTRÄGER MIT INTEGRIERTEM LENKUNGSGEHÄUSE**
FRONT AXLE CARRIER HAVING INTEGRATED STEERING HOUSING
SUPPORT D'ESSIEU AVANT AVEC CARTER DE DIRECTION INTÉGRÉ

(30) Priorität: 10.09.2009 DE 102009040821
(43) Veröffentlichungstag der Anmeldung: 18.07.2012
(73) Patentinhaber: GMF Umformtechnik GmbH, 33647 Bielefeld (DE); ThyssenKrupp Presta Aktiengesellschaft, 9492 Eschen (LI)
(72) Erfinder: KRÖGER, Matthias, 32479 Hille (DE); SUDOWE, Ulf, 49124 Georgsmarienhütte (DE); WÄCHTER, Udo, 49134 Wallenhorst (DE); SCHOLTEN, Michael, A-6723 Blons (AT); STAMM, Zoltan, CH-9472 Grabs (CH)
(74) Vertreter: Cohausz & Florack
(86) Internationale Anmeldenummer: PCT/EP2010/061511
(87) Internationale Veröffentlichungsnummer: WO 2011/029677

(56) Entgegenhaltungen:
- EP-A2- 0 794 106
- DE-A1-102005 062 330
- US-A1- 2003 107 200

## Beschreibung

Die Erfindung betrifft einen Vorderachsträger für ein Kraftfahrzeug mit Tragelementen, die Halter zur Lagerung von Radführungselementen aufweisen, und einer ein Gehäuse eines Lenkgetriebes bildenden Querstruktur, wobei die Tragelemente mit der Querstruktur verbunden sind.

Vorderachsträger dienen dazu, die radführenden Lenker durch entsprechende Lager aufzunehmen und die am Rad entstehenden Kräfte abzustützen bzw. in die Karosserie einzuleiten. Heutige, unten liegende Lenkgetriebe sind in der Regel mit dem Vorderachsträger verschraubt, der herkömmlicher Weise aus zwei Längsträgern und einem die Längsträger verbindenden Querträger besteht. Das Lenkungsgehäuse heutiger Vorderachsträgersysteme besteht üblicherweise aus Aluminiumguss, da dessen Festigkeit bei gleichzeitig geringem Gewicht ausreicht. Gewichtsreduzierung im Automobilbau ist eine der wichtigsten Maßnahmen zur Senkung der Kraftstoffverbrauchswerte und zur Minderung des CO₂-Ausstoßes.

In der EP 0 764 571 B1 ist ein Vorderachsträger dargestellt, der aus einem Lenkgetriebegehäuse und damit verschraubten Längsträgern (Seitenträgern) gebildet ist. An den Längsträgern sind in Fahrzeugquerrichtung verlaufende Ansätze ausgebildet, wobei zur Verbindung der Ansätze mit dem Lenkgetriebegehäuse sich vertikal nach oben erstreckende Stutzen zur Aufnahme von Befestigungsschrauben vorgesehen sind. Bei den in der EP 0 764 571 B1 dargestellten Längsträgern handelt es sich um relativ komplexe Gussteile mit angegossenen Längs- und Querrippen.

In der gattungsgemäßen EP 0 794 106 B2 ist ein dreiteiliger Vorderachsträger mit einem ein Gehäuse eines Zahnstangenlenkgetriebes bildenden Querträger beschrieben, wobei das Gehäuse rohrförmig ausgebildet ist und den Mittelteil des Querträgers bildet. Mit den Enden des rohrförmigen Gehäuses ist jeweils ein Längsträger (Trägerteil) fest verbunden, der Lager für die Anlenkung der Radführungslenker sowie Aufnahmen für Mittel zur Befestigung des Vorderachsträgers an der Fahrzeugkarosserie aufweist. Das rohrförmige Gehäuse besteht aus Leichtmetall und kann als Strangpressteil vorgefertigt sein. Die Längsträger bestehen ebenfalls aus Leichtmetall, wobei für deren Herstellung das sogenannte Thixoforming-Verfahren vorgeschlagen wird. Das rohrförmige Leichmetallgehäuse verbindet als Querträger die aus Leichtmetall bestehenden Längsträger und ist mit diesen an sich entsprechenden Anschlussstücke, die als Schweißstutzen ausgeführt sind, durch Schweißen verbunden.

Die Herstellung des Lenkungsgehäuses sowie der Längsträger aus Leichtmetall, insbesondere aus Aluminiumguss, ist hinsichtlich einer Gewichtsreduzierung bzw. einer Senkung des Kraftstoffverbrauchs der so ausgerüsteten Fahrzeuge von Vorteil. Andererseits verursacht die Verwendung von Leichtmetall relativ hohe Material- sowie Herstellungskosten.

Der vorliegenden Erfindung liegt die Aufgabe zugrunde, einen Vorderachsträger für ein Kraftfahrzeug zu schaffen, der im Bereich der Vorderachse einen Bauraumgewinn bei gleichzeitiger Gewichts- und Kostenreduzierung der Struktur- und Lenkungskomponenten bietet.

Gelöst wird diese Aufgabe durch einen Vorderachsträger mit den Merkmalen des Anspruchs 1 oder des Anspruchs 16.

Der erfindungsgemäße Vorderachsträger umfasst Tragelemente, die Halter zur Lagerung von Radführungslenkern aufweisen, und eine ein Gehäuse eines Lenkgetriebes bildende Querstruktur, wobei die Tragelemente mit der Querstruktur verbunden sind. Der erfindungsgemäße Vorderachsträger ist gemäß einer ersten Lehre dadurch gekennzeichnet, dass die Tragelemente als Längsträger ausgebildet sind, wobei der jeweilige Längsträger in einem Abschnitt aus miteinander verschweißten Blechschalen gebildet ist, und dass die Querstruktur als Querträger ausgebildet und aus einem aus Stahl gefertigten Lenkungsgehäuse gebildet ist.

Der Querträger eines herkömmlichen Vorderachsträgers mit einem angeschraubten Lenkungsgehäuse aus Aluminiumguss ist somit bei dem erfindungsgemäßen Vorderachsträger durch ein Lenkungsgehäuse vorzugsweise aus Stahl substituiert. Denkbar ist auch, ein Leichtblech, beispielsweise aus Aluminium oder Magnesium als Blechzuschnitt zu verwenden, oder ggf. andere geeignete Werkstoffe. Die Gewichtsbilanz fällt trotz der bevorzugten Verwendung von Stahl positiv aus, da das Stahl-Lenkungsgehäuse deutlich leichter ist als der ersetzte herkömmliche Querträger, das Aluminiumguss-Lenkungsgehäuse und dessen Verbindungselemente in Summe. Der erfindungsgemäße Vorderachsträger mit integrierter Lenkung trägt somit wesentlich zur Gewichtsreduzierung bei.

Auch lassen sich mit dem erfindungsgemäßen Vorderachsträger Bauteil- und Fertigungskosten einsparen. Der Materialwechsel des Lenkungsgehäuses von Aluminiumguss zu vorzugsweise Stahl, wie auch der verringerte Materialeinsatz der Strukturbauteile des Vorderachsträgers tragen hierzu hauptsächlich bei. Zudem vereinfacht der Wegfall der dem Lenkungsgehäuse zugeordneten Verschraubungsstellen die Strukturbauteile und reduziert die Anzahl der Normteile. Bei dem Vorderachsträger gemäß Anspruch 2 ist insbesondere die Verwendung von gebogenen Stahlrohrabschnitten zur Herstellung der Längsträger des Vorderachsträgers vorteilhaft. Hierdurch wird die Herstellung des Vorderachsträgers schweißtechnisch vereinfacht, was sich auch günstig auf die Fertigungskosten auswirkt. Auf der Seite des Automobilbauers verringern sich Logistik- und Montageaufwand, da das Lenkungsgehäuse mit den darin enthaltenen Lenkgetriebekomponenten nicht mehr separat transportiert und montiert werden muss.

Besonders bei front- und allradgetriebenen Fahrzeugen ist die Bauraumsituation im Bereich der Vorderachse schwierig. Insbesondere für neue energiesparende Technologien, wie etwa Hybridantriebe und Weiterentwicklungen von elektrisch unterstützten Lenksystemen oder bei Verwendung von zusätzlichen Aggregaten wie zum Beispiel aktiven Stabilisatoren, ist jeder gewonnene Bauraum wertvoll. Bei dem erfindungsgemäßen Vorderachsträger wird der herkömmliche Querträger durch das Lenkungsgehäuse ersetzt bzw. geometrisch überlagert und somit ein beträchtlicher Bauraumgewinn erzielt.

Grundsätzlich kann die in dem erfindungsgemäßen Vorderachsträger integrierte Lenkung als hydraulische Lenkung ausgeführt sein. Eine bevorzugte Ausgestaltung des erfindungsgemäßen Vorderachsträgers sieht jedoch die Integration einer elektromechanischen Lenkung mit einer Sensoreinheit zur Lenkmomentmessung vor. Die Lenkmomentmessung basiert dabei beispielsweise auf einer berührungslosen Verdrehwinkelmessung eines Torsionsstabes. Mit einer solchen, elektrisch unterstützten Lenkung ist es möglich, die Unterstützungskraft an die Fahrzeuggeschwindigkeit und/oder an weitere Einflussfaktoren anzupassen. Eine solche elektromechanische Lenkung ermöglicht zudem die Realisierung von Zusatzfunktionen, wie z.B. eine Seitenwindkompensation oder Spurassistenz. Auch der Energieverbrauch wird gegenüber einer hydraulischen Lenkung reduziert, weil die elektromechanische Lenkung nur dann mit Energie versorgt wird, wenn sie benutzt wird. Insbesondere entfallen mit einer elektromechanische Lenkung die für eine hydraulische Lenkung erforderliche Hydraulikflüssigkeit, die Hydraulikpumpe und -leitungen, wodurch wiederum weniger Umweltbelastung und zusätzlicher Bauraumgewinn im Fahrzeug erzielt werden. Das erfindungsgemäße Konzept bietet somit den Vorteil, eine höherwertige Lenkfunktion integrieren zu können ohne hierzu den Bauraum bzw. die Lage angrenzender Aggregate ändern zu müssen.

Zur Realisierung einer elektromechanischen Lenkung umschließt das Lenkungsgehäuse des erfindungsgemäßen Vorderachsträgers nach einer bevorzugten Ausgestaltung die Lenkungskomponenten und nimmt die Lagerelemente auf. Vorzugsweise ist das Lenkungsgehäuse als einstückige Schweißkonstruktion aus Blechkomponenten gebildet. Beispielsweise lässt sich das Lenkungsgehäuse in unterschiedliche Abschnitte mit entsprechend angeordneten Lenkungskomponenten unterteilen, nämlich in ein rohrförmiges Zahnstangengehäuse, ein einen Kugelgewindetrieb aufnehmendes Lagergehäuse und ein einen Riementrieb umschließendes Kugelgewindetriebgehäuse. Dabei sind das Zahnstangengehäuse und das Lagergehäuse vorzugsweise mit einer dazwischen angeordneten Motorplatte zur Halterung eines Servolenkungsmotors verschweißt. Die so angeordnete Motorplatte bietet den Vorteil, dass die den Servolenkungsmotor umfassende Antriebseinheit entsprechend den jeweiligen Bauraumbedingungen in verschiedenen Positionen platziert werden kann. Der Servolenkungsmotor wird dabei vorzugsweise so angeordnet, dass dessen Motorwelle parallel zur Längsachse des Lenkungsgehäuses verläuft.

Zur Erzielung einer ausreichend hohen Biegesteifigkeit des Lenkungsgehäuses bei möglichst geringem Gewicht ist es ferner vorteilhaft, wenn nach einer weiteren Ausgestaltung des erfindungsgemäßen Vorderachsträgers die Motorplatte über ein Stützblech mit dem Zahnstangengehäuse verbunden ist. Das Stützblech verringert den Steifigkeitssprung zwischen Motorplatte und Zahnstangengehäuse und trägt somit bei Belastung des Vorderachsträgers zu einer Vergleichmäßigung der Spannungsverteilung bei.

Für eine zuverlässige Funktion der Lenkung ist es wichtig, dass die beweglichen Teile innerhalb des Lenkungsgehäuses vor Schmutz und Wasser geschützt sind. Andererseits ist bei der Konstruktion des integrierten Lenkungsgehäuses des Vorderachsträgers auch auf eine möglichst einfache Montierbarkeit zu achten. Diese Anforderungen werden sicher erzielt, wenn das Kugelgewindetriebgehäuse nach einer weiteren bevorzugten Ausgestaltung der Erfindung einen eine seitliche Montageöffnung definierenden Flansch aufweist, der mit Ausnehmungen und daran angeschweißten Muttern zur Befestigung eines das Kugelgewindetriebgehäuse abdichtenden Verschlussdeckels versehen ist.

Der Verschlussdeckel (Gehäusedeckel) kann relativ kostengünstig beispielsweise aus Stahlblech durch Umformen und Zuschneiden gefertigt werden. Vorzugsweise weist der Verschlussdeckel des erfindungsgemäßen Vorderachsträgers eine Öffnung bzw. Durchbrechung mit einer kragenförmig ausgebildeten Ausformung als Dichtsitz für einen eine Spurstange umschließenden Faltenbalg auf. Dadurch wird ermöglicht, dass der Verschlussdeckel im Wesentlichen keine Lenkungskräfte aufnimmt.

Das den Kugelgewindetrieb aufnehmende Lagergehäuse (Hauptlagergehäuse) muss bei komplexer Form- und Beschnittgeometrie hohe Anforderungen hinsichtlich seiner Maßgenauigkeit erfüllen. Diesbezüglich ist es vorteilhaft, wenn nach einer weiteren Ausgestaltung des erfindungsgemäßen Vorderachsträgers das Lagergehäuse mit stufenförmig erweitertem Innendurchmesser und einem axial verlaufendem Ausschnitt ausgeführt ist. Der Sitz des Kugelgewindetriebes im Lagergehäuse wird zudem spanend bearbeitet, um eine hohe Maßhaltigkeit bzw. Rundheit zu erzielen. Durch die Ausbildung des Lagergehäuses vorzugsweise als Fließpressteil kann der Aufwand für die anschließende spanende Bearbeitung bzw. der Materialabtrag gering gehalten werden.

Eine weitere bevorzugte Ausgestaltung des erfindungsgemäßen Vorderachsträgers besteht darin, dass an den vorzugsweise aus Stahlblechschalen gebildeten Abschnitten der Längsträger Muttern angeschweißt oder Gewindebohrungen ausgebildet sind, an denen ein Versteifungs- und/oder Abschirmblech angeschraubt ist. Das den Vorderachsträger verstärkende Versteifungs- und/oder Abschirmblech kann beispielsweise aus Aluminium gefertigt sein.

Der erfindungsgemäße Vorderachsträger ist gemäß einer zweiten Lehre dadurch gekennzeichnet, dass das Tragelement aus miteinander verschweißten Blechschalen gebildet ist und die Querstruktur aus einem mittleren Abschnitt der miteinander verschweißten Blechschalen und einen aus einem Stahl gefertigten Lenkungsgehäuse gebildet ist.

Weitere bevorzugte und vorteilhafte Ausgestaltungen des erfindungsgemäßen Vorderachsträgers sind in den Unteransprüchen angegeben.

Nachfolgend wird die Erfindung anhand einer mehrere Ausführungsbeispiele darstellenden Zeichnung näher erläutert. Es zeigen:
- Fig. 1: eine Prinzipdarstellung eines ersten erfindungsgemäßen Vorderachsträgers;
- Fig. 2: einen erfindungsgemäßen Vorderachsträger mit Servomotor, Spurstangen und Versteifungsblech, in perspektivischer Darstellung;
- Fig. 3: den Vorderachsträger der Fig. 2, in perspektivischer Ansicht;
- Fig. 4: den Vorderachsträger der Fig. 2, in perspektivischer Unteransicht;
- Fig. 5: einen Abschnitt des Vorderachsträgers gemäß Fig. 3 mit montierter Zahnstange und einem anzuschraubenden Gehäusedeckel;
- Fig. 6: eine perspektivische Darstellung eines zweiten erfindungsgemäßen Vorderachsträgers; und
- Fig. 7: den Vorderachsträger der Fig. 6 im Querschnitt.

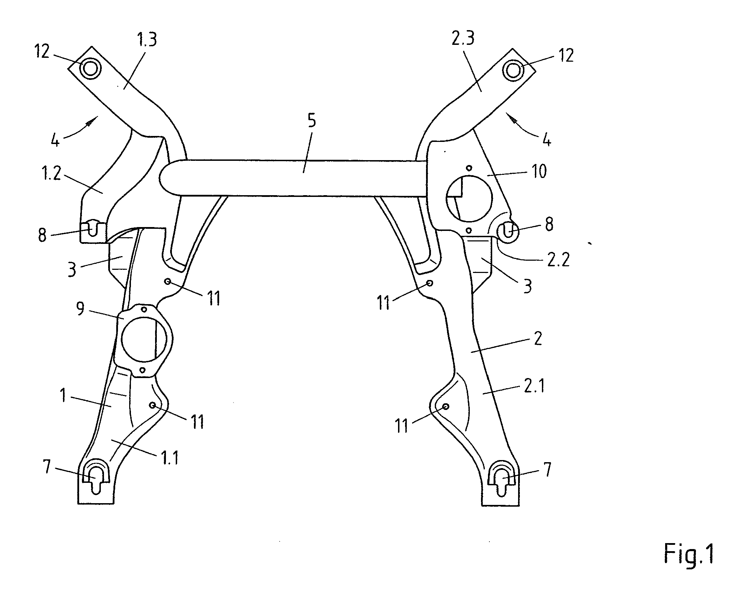

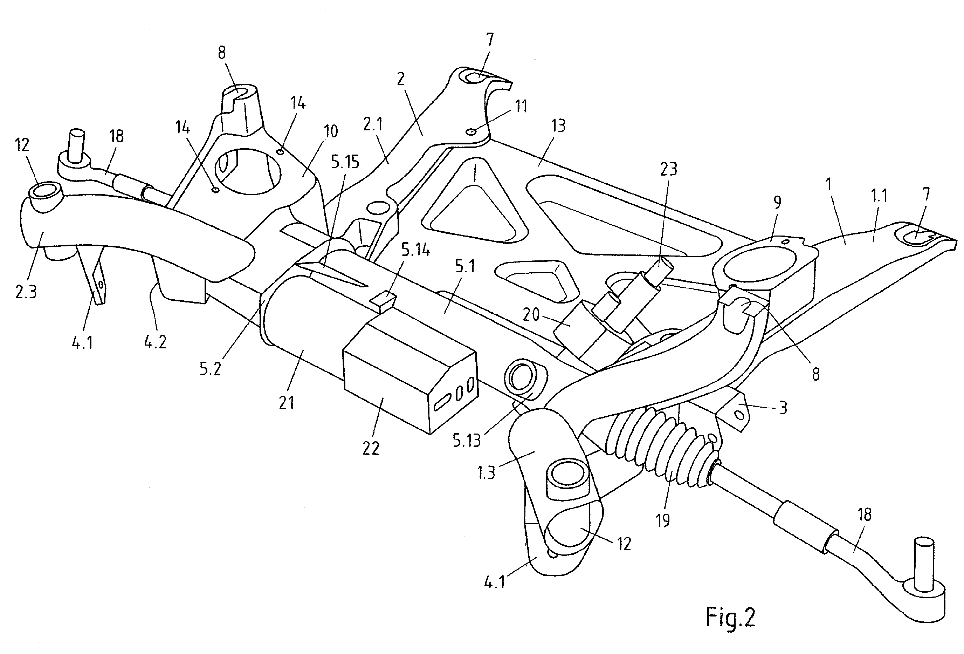

In Fig. 1 ist die Ausführung eines ersten erfindungsgemäßen Vorderachsträgers mit integriertem Lenkungsgehäuse beispielhaft dargestellt. Der Vorderachsträger besteht aus Längsträgern 1, 2, die Halter 3, 4 zur Lagerung von Radführungselementen aufweisen. Die Längsträger 1, 2 sind durch Schweißverbindungen mit einem Lenkungsgehäuse 5 verbunden, das zugleich die Funktion eines Querträgers übernimmt. Die Längsträger 1, 2 sind im hinteren Abschnitt aus miteinander verschweißten Stahlblechschalen 1.1, 1.2, 2.1, 2.2 gebildet. Sie weisen Ausnehmungen 7, 8 auf, die der Anbindung bzw. Verschraubung des Vorderachsträgers an der Fahrzeugkarosserie dienen. Die hinteren und mittleren Ausnehmungen 7, 8 weisen in ihren Anlageflächen Ausklinkungen auf, die ein definiertes Versagen dieser Verbindungen im Crashfall ermöglichen. Die die mittleren Ausnehmungen 8 bzw. Anbindungsstellen aufweisenden Stahlblechformteile 1.2, 2.2 sind auf den Längsträgern 1, 2 angebracht und mit diesen verschweißt. Des Weiteren sind auf den Längsträgern 1, 2 Konsolen oder Halter 9, 10 zur Lagerung eines Verbrennungsmotors angebracht und mit den Längsträgern verschweißt. Ferner sind an den durch Umformen und Beschneiden hergestellten Stahlblechschalen 1.1, 2.1 der Längsträger 1, 2 Befestigungsabschnitte mit Löchern 11 zum Anschrauben eines aus Aluminium bestehenden Versteifungsbleches (Schubfeldes) ausgebildet (vgl. Bezugszeichen 13 in Fig. 2).

Im vorderen Bereich sind die Längsträger 1, 2 durch gebogene Stahlrohrabschnitte 1.3, 2.3 gebildet. Am Endbereich des Stahlrohrabschnitts 1.3 bzw. 2.3 ist eine Montagebuchse 12 angeordnet, die in eine Ausnehmung des Rohrabschnitts 1.3, 2.3 formschlüssig eingesetzt und mit dem Rohrabschnitt verschweißt ist.

Die Querverbindung der linken und rechten Längsträger 1, 2 wird durch das aus Stahl gefertigte Lenkungsgehäuse 5 gebildet. Bei dem rohrförmigen Lenkungsgehäuse 5 kann es sich um ein hydraulisches Lenkgetriebe handeln. Durch die Integration eines solchen Lenkungsgehäuses wird der Raum eines herkömmlichen, keine Lenkungsfunktion aufweisenden Querträgers frei. Dieser Freiraum, vor und über dem Vorderachsträger, kann für Weiterentwicklungen an der Vorderachse genutzt werden.

Erfindungsgemäß kann ein Teil dieses Freiraums für die Integration einer elektromechanischen Lenkung genutzt werden, wie das in Fig. 2 dargestellte Ausführungsbeispiel zeigt. In diesem Fall entfallen Zusatzaggregate wie Hydropumpe, Ausgleichbehälter, usw., so dass zusätzlich in anderen Fahrzeugbereichen Bauräume gewonnen werden. Mit dem erfindungsgemäßen Vorderachsträger kann somit ein elektrisch unterstütztes Lenkgetriebe in den vorhandenen Bauraum eines Serienfahrzeuges integriert werden, ohne dass hierzu in angrenzende Bauräume eingegriffen werden muss.

Der in Fig. 2 dargestellte Vorderachsträger mit integrierter Lenkung bildet ein System bzw. Modul, das aus der eigentlichen Strukturkomponente aus umgeformtem, geschweißtem Stahlblech und den montierten Lenkungskomponenten zusammengesetzt ist. Der Vorderachsträger ist in offener U-Form ausgebildet und wird durch ein daran angeschraubtes Versteifungsblech 13 aus Aluminium verstärkt.

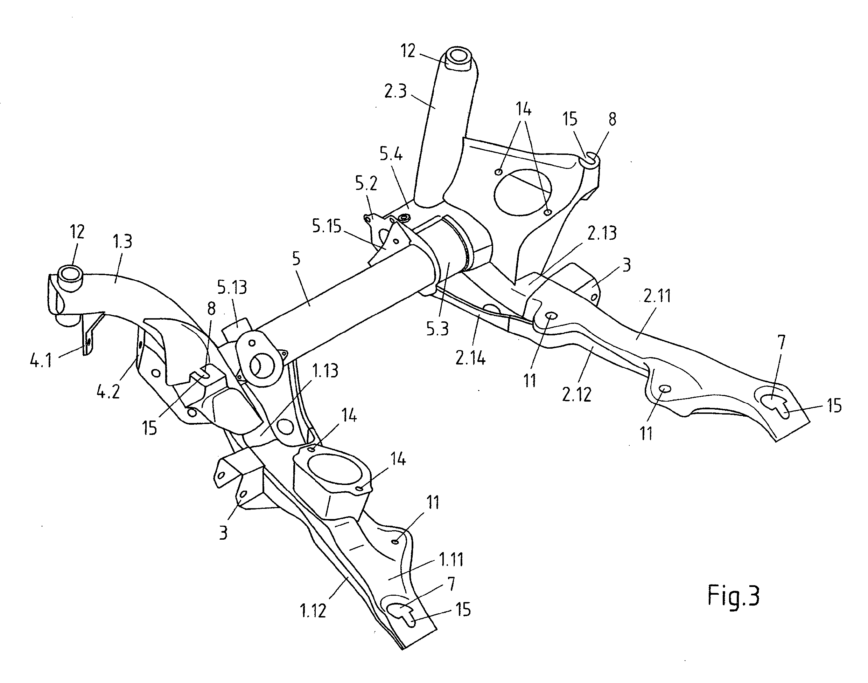

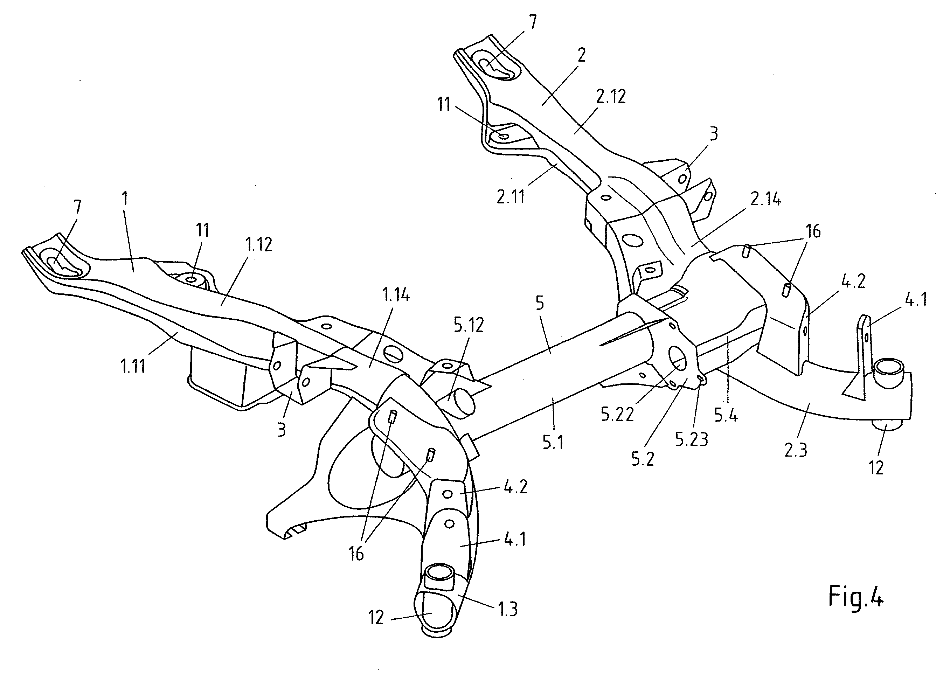

Die Längsträger 1, 2 des Moduls sind im hinteren Abschnitt zweischalig ausgeführt. Ober- und Unterschalen der Längsträger 1, 2 sind in den Figuren 3 und 4 mit 1.11, 1.12, 2.11 und 2.12 bezeichnet. Sie weisen Ausnehmungen 7 zur hinteren Anbindung des Vorderachsträgers an die Fahrzeugkarosserie und Durchbrüche 11 mit angeschweißten Muttern zur Befestigung des Versteifungsbleches 13 auf.

Die Form der Schweißverbindung von Ober- und Unterschale variiert von Stumpfnaht an der Außenseite zu Überlapp- bzw. Kehlnaht an der Innenseite der Längsträgerschalen 1.11, 1.12, 2.11, 2.12. Diese Ausgestaltung vermeidet unnötiges Gewicht, das zum Beispiel bei einer herkömmlichen Flanschkonstruktion mit einfließt. Die Ober- bzw. Unterschale des jeweiligen Längsträgers 1, 2 ist in Längsrichtung mehrteilig, d.h. aus mehreren Oberschalenteilen 1.11, 1.13, 2.11, 2.13 bzw. Unterschalenteilen 1.12, 1.14, 2.12, 2.14 gebildet. Im vorderen Bereich sind die Längsträger 1, 2 wiederum durch gebogene Rohrabschnitte 1.3, 2.3 weitergeführt, deren Enden mit fließgepressten Montagebuchsen 12 versehen sind, an denen der Vorderachsträger mit der Karosserie verschraubt werden kann. Durch die Verwendung der Rohrabschnitte 1.3, 2.3 werden im Bereich des Lenkungsgehäuses 5 Schweißnahtkollisionen verhindert, die andernfalls aufgrund der Vielzahl der in diesem Bereich vorgesehenen Einzelteile auftreten würden.

Auf den Längsträgern 1, 2 sind topfförmige Stahlblechformteile 9, 10 zur Aufnahme von Motorlagern und Stahlblechformteile 1.2, 2.2 zur Verschraubung des mittleren Abschnitts des Vorderachsträgers mit der Karosserie angeschweißt. Die Motorlager werden durch je zwei Schweißmuttern 14 fixiert. Die hinteren und mittleren Verschraubungsabschnitte der Längsträger 1, 2 weisen in ihren Anlageflächen Ausklinkungen 15 auf, um ein definiertes Versagen dieser Verbindungsstellen bei Überschreiten einer bestimmten Belastung im Falle eines Aufpralls des Fahrzeugs auf ein Hindernis sicherzustellen.

Seitlich an den Längsträgern 1, 2 sind im Bereich der verschweißten Stahlblechschalen 1.11, 1.12, 2.11, 2.12 einteilige gabelförmige Halter 3 angeschweißt, die der Anlenkung von Radführungselementen (z.B. Querlenkern) dienen. Des Weiteren sind die Längsträger 1, 2 mit zweiteiligen Haltern 4.1, 4.2 versehen, die der Anlenkung von Zugstreben dienen. Die Halter 4.1, 4.2 sind mit den rohrförmigen Abschnitten 1.3, 2.3 der Längsträger verschweißt. Die inneren Halter 4.2 dienen zusätzlich der Befestigung eines Stabilisators. Hierzu sind in den Anlageflächen für die Stabilisatorlager Gewindebolzen 16 eingepresst. Die Halter 3 bzw. Konsolen 4.1, 4.2, die zur Aufnahme der angrenzenden Achskomponenten dienen, sind ausschließlich in verformungssteifen Bereichen des Vorderachsträgers, zum Beispiel im Bereich von Biegungen der Stahlblechschalen 1.11, 2.11 bzw. Rohrabschnitte 1.3, 2.3, angebunden.

Die Längsträger 1, 2 sind wiederum durch das aus Stahlblech gefertigte Lenkungsgehäuse 5 verbunden. Das Lenkungsgehäuse 5 ist somit Teil der Strukturkomponente des Vorderachsträgers. Hauptbestandteile des Lenkungsgehäuses 5, das einen herkömmlichen (zusätzlichen) Querträger ersetzt, ist das Zahnstangengehäuse 5.1, welches aus einem manipulierten, d.h. durch Biegen und Eindrücken geformten Stahlblechrohr besteht. Die Komplexität der Gehäusegeometrie ist sehr niedrig ausgeführt, sodass aufwendige und somit kostenintensive Herstellungsverfahren, wie zum Beispiel eine Innenhochdruckumformung, vermieden werden können.

Das Lenkungsgehäuse 5 ist im Wesentlichen wasserdicht ausgeführt. An den Enden der im Zahnstangengehäuse 5.1 gelagerten Zahnstange 17 sind Spurstangen 18 montiert, die durch Faltenbalge 19 gegenüber dem Lenkungsgehäuse 5 abgedichtet werden. Zur Erzielung einer dichten Verbindung zwischen dem linken Faltenbalg 19 und dem Lenkungsgehäuse 5 kann das dortige Ende 5.11 des Zahnstangengehäuses 5.1 innenseitig nachträglich spanend bearbeitet sein.

Auf der linken Seite ist das Zahnstangengehäuse 5.1 durch zwei zylindrische Gehäuseabschnitte 5.12, 5.13 durchstoßen. Hierbei handelt es sich um ein Ritzelgehäuse 5.12 und ein hierzu um etwa 90° versetzt angeordnete Druckstückgehäuse 5.13. Ein in das Druckstückgehäuse 5.13 einschraubbares Druckstück wird zur Einstellung des Spiels der Zahnstange 17 unter optimalen Reibungswerten eingestellt und gegen Rotation gesichert. Beide Bauteile 5.12, 5.13 sind Rohrabschnitte, die nach dem Verschweißen mit dem Zahnstangengehäuse 5.1 spanend bearbeitet werden. Auf dem Ritzelgehäuse 5.12 ist ein Sensorgehäuse 20 angebracht. In dem Sensorgehäuse 20 sind ein Torsionsstab und eine mit der Lenksäule des Fahrzeugs verbindbare Sensorvvelle angeordnet.

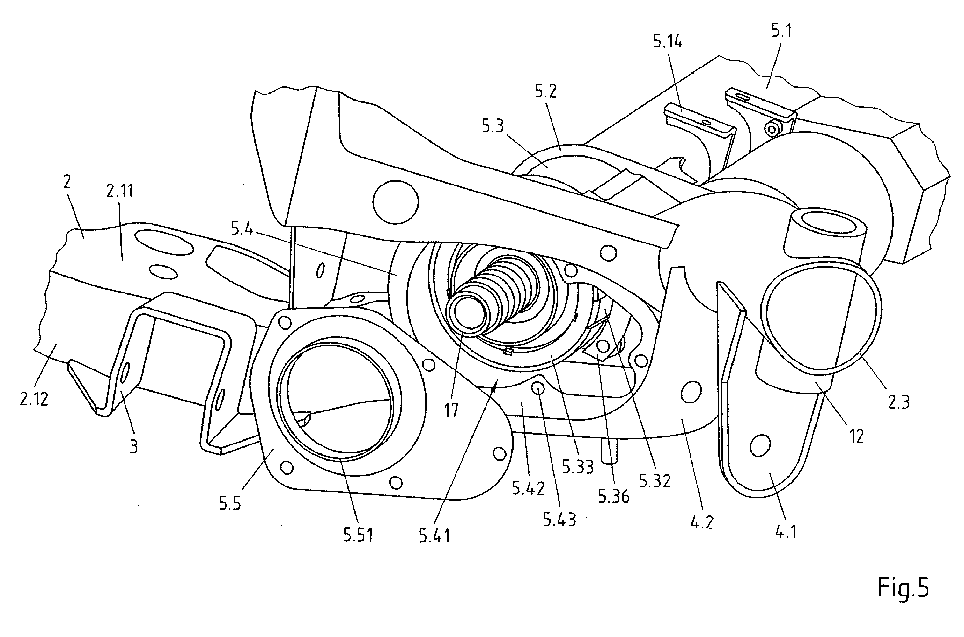

Auf der rechten Seite endet das Zahnstangengehäuse 5.1 an einer Motorplatte 5.2. Dabei handelt es sich um ein Zwischenblech aus Stahl, welches als Verbindung zu einem einen Kugelgewindetrieb aufnehmenden Lagergehäuse (Hauptlagergehäuse) 5.3 und als Träger eines Servolenkungsmotors 21 dient. Hierzu weist die Motorplatte 5.2 einen (nicht gezeigten) Durchbruch innerhalb des Lenkungsgehäuses zur Durchführung der Zahnstange 17, einen Durchbruch 5.22 zur Aufnahme der Motorwelle und Langlöcher 5.23 zur Verschraubung des Motors 21 auf. Die Motorwelle verläuft parallel zur Längsachse des rohrförmigen Zahnstangengehäuses 5.1. Der Motor 21 treibt durch einen Riemenantrieb und den Kugelgewindetrieb die Zahnstange 17 an. Die Langlöcher 5.23, deren Längsachsen im Wesentlichen parallel zueinander verlaufen, ermöglichen ein Spannen des Riemenantriebs durch eine Verschiebung und Fixierung des Motors 21. Zusätzlich ist der Motor im mittleren Bereich des Lenkungsgehäuses 5 (Zahnstangengehäuses 5.1) an einem dort angeschweißten Motorhalter 5.14 abgestützt (siehe Fig. 2). An dem Zahnstangengehäuse 5.1 und der Motorplatte 5.2 sind zwei ebene Stützbleche 5.15 angeschweißt. Die Stützbleche 5.15 verringern den Steifigkeitssprung zwischen Motorplatte 5.2 und Zahnstangengehäuse 5.1. Das rechtsseitig angebundene Lagergehäuse 5.3 ist als Fließpressteil mit anschließender spanender Bearbeitung ausgeführt. Das Lagergehäuse 5.3 weist zur axialen Festlegung des Kugelgewindetriebes einen stufenförmig erweiterten Innendurchmesser bzw. Absatz auf. Ferner hat das Lagergehäuse 5.3 einen axial verlaufenden Ausschnitt 5.32 für die Aufnahme des Riementriebes. Zur axialen Festlegung einer zylindrischen Lagerschale des Kugelgewindetriebes ist ein Schraubring 5.33 vorgesehen, der in das Lagergehäuse einschraubbar ist (Fig. 5). Der Schraubring 5.33 weist an seiner Innenseite über den Umfang verteilt angeordnete Ausnehmungen auf, an denen ein Schraubwerkzeug formschlüssig angreifen kann. Ferner ist das Lagergehäuse 5.3 an seiner Außenseite mit (nicht dargestellten) abstehenden Haltern versehen, an denen ein den axialen Ausschnitt 5.32 überbrückender Verbindungssteg 5.36 anschraubbar ist. Der montierte Verbindungssteg 5.36 stabilisiert das Lagergehäuse 5.3 und verhindert dessen radiale Aufweitung im Bereich des Ausschnitts 5.32.

Mit dem Hauptlagergehäuse 5.3 ist ein den Riementrieb umschließendes, dem Kugelgewindetrieb zugeordnetes Gehäuse 5.4 verbunden. Das Kugelgewindetriebgehäuse 5.4 ist zweiteilig ausgebildet und umlaufend, d.h. wasserdicht mit dem Hauptlagergehäuse 5.3 und der Motorplatte 5.2 verschweißt. Das Kugelgewindetriebgehäuse 5.4 weist einen eine seitliche Montageöffnung 5.41 definierenden Flansch 5.42 auf, der mit Ausnehmungen 5.43 und daran innenseitig angeschweißten Muttern zur Befestigung eines das Kugelgewindetriebgehäuse abdichtenden Verschlussdeckels 5.5 versehen ist. Der Verschlussdeckel 5.5 hat eine Öffnung mit einer kragenförmig ausgebildeten Ausformung 5.51, die als Dichtsitz für den rechten Faltenbalg dient.

Die zur Herstellung des Vorderachsträgers verwendeten Stahlbleche haben Standardgüten wie S355MC und S420MC. Die Blechdicken liegen dabei vorzugsweise im Bereich von 1,5 mm bis 3,5 mm. Die Oberfläche des erfindungsgemäßen Vorderachsträgers ist durch eine Lackbeschichtung gegen Korrosion geschützt.

An den Servolenkungsmotor 21 ist axial ein elektronisches Steuergerät 22 angeflanscht. Ein Sensor, der im Bereich der Eingangswelle 23 bzw. Lenksäule angeordnet und über ein Kabel am Steuergerät 22 angeschlossen ist, detektiert das vom Fahrer benötigte Unterstützungsmoment und meldet dieses an das Steuergerät. Das Steuergerät 22 enthält einen programmierbaren Mikroprozessor, in welchem eine Software gespeichert ist, die das vom Sensor an das Steuergerät 22 angegebene Signal analysiert und auf Plausibilität prüft, bevor die Ansteuerung des Motors 21 erfolgt. Der Motor 21 erzeugt die geforderte Leistung (Moment * Drehzahl), die über die mechanischen Komponenten wie Riementrieb und Kugelumlaufgewinde die geforderte Lenkleistungsunterstützung auf die Zahnstange 17 und von dort aus über die Spurstangen 18 letztendlich auf die Positionierung der Räder überträgt.

Bei dem Servolenkungsmotor 21 handelt es sich um einen bürstenlosen Synchronmotor, der Magnete aus Neodym aufweist. Der Leistungsbereich des Motors 21 liegt vorzugsweise im Bereich von 3,5 Nm bis weit über 9 Nm. Der Motor ist mit einem Sternpunktrelais ausgestattet, um im Kurzschlussfall einer Wicklung die geforderte Sicherheit zu gewährleisten.

Zur Detektierung des gewünschten Fahrerunterstützungsmomentes dient ein Drehmomentsensor, der berührungslos den Magnetflussunterschied misst, der durch die Tordierung des Drehstabes entsteht. Die funktionale Sicherheit der Lenkung wird durch Verdoppelung des im Sensorgehäuse 20 angeordneten Sensors, d.h. eine Redundanz von Sensoren, und parallel laufende Softwaremodule, die kontinuierlich alle Sensorsignale bzw. Funktionen auf Plausibilität hin prüfen, realisiert.

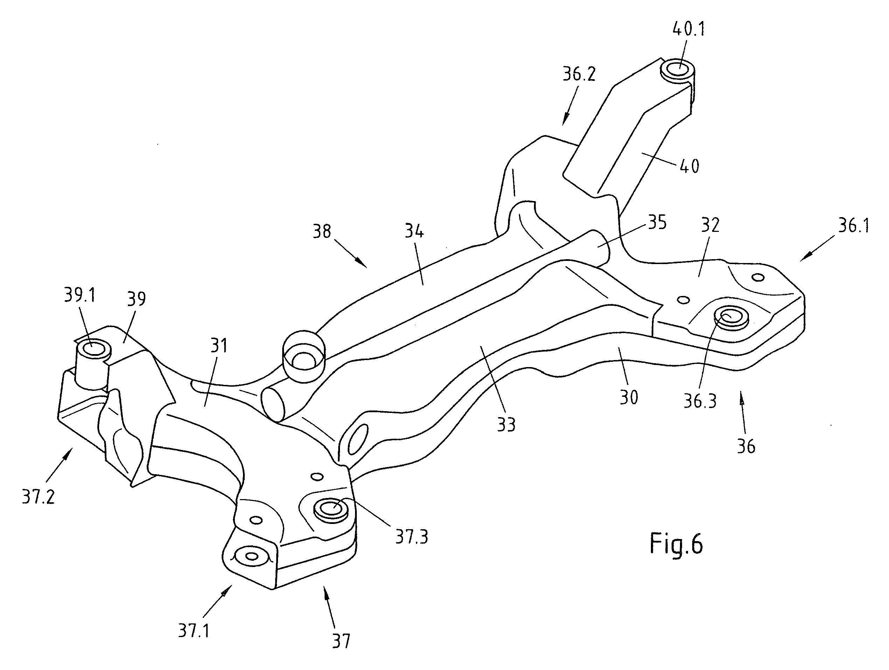

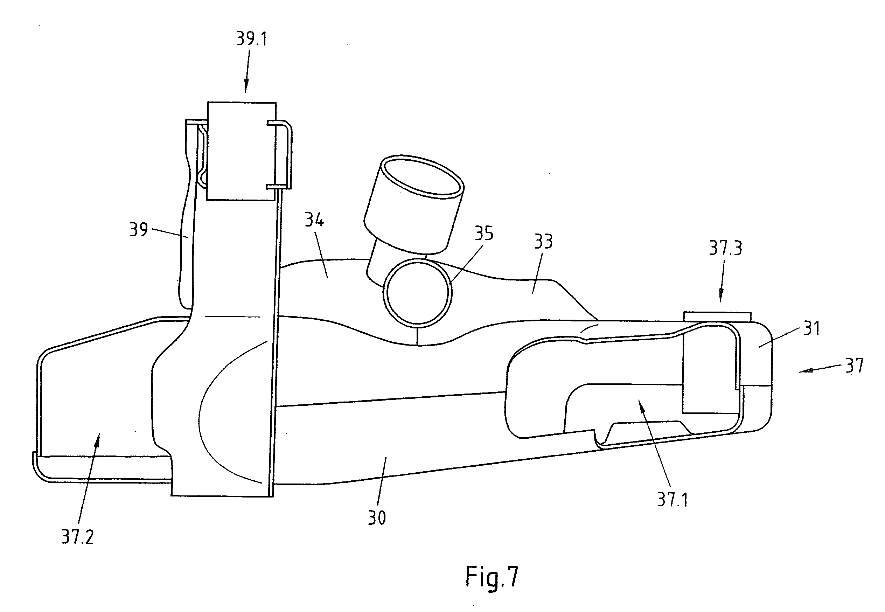

In den Figuren 6 und 7 ist die Ausführung eines zweiten erfindungsgemäßen Vorderachsträgers mit integriertem Lenkungsgehäuse dargestellt. Der Vorderachsträger ist aus mehreren miteinander verschweißten Blechschalen 30, 31, 32, 33, 34 zusammengesetzt. Die Blechschale 30 ist als einteilige Blechhalbschale aus einem Blechzuschnitt hergestellt, die das Unterteil des Vorderachsträgers bildet. Ferner sind zwei weitere Blechschalen 31, 32 vorgesehen, die jeweils links und rechts mit der das Unterteil des Vorderachsträgers bildenden Blechschale 30 mittels Verschweißungen verbunden sind und zusammen mit der Blechschale 30 Tragelemente 36, 37 bilden, die Halter 37.1, 37.2, 36.1, 36.2 zur Lagerung von Radführungselementen aufweisen. Der Vorderachsträger weist eine Querstruktur auf, die aus einem mittleren Abschnitt 38 der miteinander verschweißten Stahlblechschalen 30, 33 und 34 und einem aus Stahl gefertigten Lenkungsgehäuse gebildet ist. Die miteinander verschweißten Blechschalen 30, 31, 32, die beabstandet zueinander angeordnet sind, ermöglichen die Aufnahme von Radführungselementen, so dass hierzu keine zusätzlichen Bauteile, wie beispielsweise Konsolen, erforderlich sind bzw. solche Bauteile zur Aufnahme von Radführungselementen auf ein Minimum reduziert werden können. Zusätzliche Konsolen 39, 40 können vorgesehen sein, die mit den Tragelementen 36, 37 verschweißt sind. Über die Öffnungen 39.1, 40.1 und 37.3, 36.3 der Tragelemente 37, 36 kann der Vorderachsträger an die Fahrzeugkarosserie angebunden bzw. verschraubt werden.

Die Aufnahme des Lenkungsgehäuses 35 zwischen den Blechschalen 33, 34, wobei diese Elemente miteinander verschweißt sind, ermöglicht eine sehr biegsteife Ausgestaltung eines Vorderachsträgers. Die Bauhöhe des Vorderachsträgers kann dementsprechend, unter Berücksichtigung der gestellten Anforderungen, reduziert werden.

Alternativ können die Blechschalen 31, 32, 33 und 34 durch nur eine Blechschale substituiert werden. Insbesondere beinhaltet die vorliegende Erfindung eine Ausführung, in welcher der Vorderachsträger aus einer einteiligen Oberschale und einer einteiligen Unterschale mit einem integrierten Lenkungsgehäuse gebildet ist.

Das in den Figuren 6 und 7 dargestellte Ausführungsbeispiel bezieht sich auf einen Vorderachsträger mit integrierter Lenkung in Form einer hydraulischen Lenkung. Ebenso kann es sich bei der in einem Vorderachsträger gemäß den Figuren 6 und 7 integrierten Lenkung aber bei entsprechender Anpassung auch um eine elektromechanische Lenkung handeln, wie sie oben im Zusammenhang mit dem in den Figuren 2 bis 5 dargestellten Ausführungsbeispiel beschrieben ist.

Die Ausführung des erfindungsgemäßen Vorderachsträgers ist nicht auf die vorstehend beschriebenen Ausführungsbeispiele beschränkt. Vielmehr sind zahlreiche Varianten denkbar, die auch bei von den Ausführungsbeispielen abweichender Gestaltung von der Erfindung Gebrauch machen.

## Patentansprüche

1. Vorderachsträger für ein Kraftfahrzeug mit Tragelementen, die Halter (3, 4, 4.1, 4.2) zur Lagerung von Radführungselementen aufweisen, und einer ein Gehäuse eines Lenkgetriebes bildenden Querstruktur, wobei die Tragelemente mit der Querstruktur verbunden sind, wobei die Tragelemente als Längsträger (1, 2) ausgebildet sind, **dadurch gekennzeichnet, dass** der jeweilige Längsträger (1, 2) aus miteinander verschweißten Blechschalen (1.11, 1.12, 1.13, 1.14, 2.11, 2.12, 2.13, 2.14) gebildet ist, und dass die Querstruktur als Querträger ausgebildet ist und aus einem aus Stahl gefertigten Lenkungsgehäuse (5) gebildet ist.

2. Vorderachsträger nach Anspruch 1,
**dadurch gekennzeichnet, dass** der jeweilige Längsträger (1, 2) in einem Abschnitt aus miteinander verschweißten Blechschalen (1.11, 1.12, 1.13, 1.14, 2.11, 2.12, 2.13, 2.14) und in einem weiteren Abschnitt aus einem gebogenen Rohrabschnitt (1.3, 2.3) gebildet ist.

3. Vorderachsträger nach Anspruch 1 oder 2,
**dadurch gekennzeichnet, dass** das Lenkungsgehäuse (5) aus einem rohrförmigen Zahnstangengehäuse (5.1), einem einen Kugelgewindetrieb aufnehmenden Lagergehäuse (5.3) und einem einen Riementrieb umschließenden
Kugelgewindetriebgehäuse (5.4) gebildet ist.

4. Vorderachsträger nach Anspruch 3,
**dadurch gekennzeichnet, dass** das Zahnstangengehäuse (5.1) und das Lagergehäuse (5.3) mit einer dazwischen angeordneten Motorplatte (5.2) zur Halterung eines Servolenkungsmotors (21) verschweißt sind.

5. Vorderachsträger nach Anspruch 4,
**dadurch gekennzeichnet, dass** die Motorwelle eines an der Motorplatte (5.2) montierten Servolenkungsmotors (21) parallel zur Längsachse des Lenkungsgehäuses (5) verläuft.

6. Vorderachsträger nach Anspruch 4 oder 5,
**dadurch gekennzeichnet, dass** die Motorplatte (5.2) über ein Stützblech (5.15) mit dem Zahnstangengehäuse (5.1) verbunden ist.

7. Vorderachsträger nach einem der Ansprüche 3 bis 6,
**dadurch gekennzeichnet, dass** das Kugelgewindetriebgehäuse (5.4) einen eine seitliche Montageöffnung (5.41) definierenden Flansch (5.42) aufweist, der mit Ausnehmungen (5.43) und daran angeschweißten Muttern zur Befestigung eines das Kugelgewindetriebgehäuse (5.4) abdichtenden Verschlussdeckels (5.5) versehen ist.

8. Vorderachsträger nach Anspruch 7,
**dadurch gekennzeichnet, dass** der Verschlussdeckel (5.5) eine Öffnung mit einer kragenförmig ausgebildete Ausformung (5.51) als Dichtsitz für einen Faltenbalg (19) aufweist.

9. Vorderachsträger nach einem der Ansprüche 3 bis 8,
**dadurch gekennzeichnet, dass** das Lagergehäuse (5.3) mit stufenförmig erweitertem Innendurchmesser und einem axial verlaufendem Ausschnitt (5.32) ausgeführt ist.

10. Vorderachsträger nach Anspruch 2,
**dadurch gekennzeichnet, dass** der jeweilige Längsträger am Endbereich des gebogenen Rohrabschnitts (1.3, 2.3) mit einer Montagebuchse (12) versehen ist, die in eine Ausnehmung des Rohrabschnitts (1.3, 2.3) formschlüssig eingesetzt ist.

11. Vorderachsträger nach Anspruch 2,
**dadurch gekennzeichnet, dass** ein Halter (4.1) an dem jeweiligen Rohrabschnitt (1.3, 2.3) des Längsträgers (1, 2) angeschweißt ist, der zusammen mit einem an einer der Blechschalen des Längsträgers (1, 2) ausgebildeten Halter (4.2) ein Lager für einen Radführungslenker bildet.

12. Vorderachsträger nach einem der Ansprüche 1 bis 11,
**dadurch gekennzeichnet, dass** an dem aus Blechschalen (1.11, 1.12, 1.13, 1.14, 2.11, 2.12, 2.13, 2.14) gebildeten Abschnitt des Längsträgers (1, 2) ein einteiliger, gabelförmiger Halter (3) zur Lagerung eines Radführungselements angeschweißt ist.

13. Vorderachsträger nach einem der Ansprüche 1 bis 12,
**dadurch gekennzeichnet, dass** an mindestens einem der Längsträger (1, 2) ein Halter oder eine Konsole (9, 10) zur Lagerung des Verbrennungsmotors des Kraftfahrzeuges angeschweißt ist.

14. Vorderachsträger nach Anspruch 2 und Anspruch 13,
**dadurch gekennzeichnet, dass** der Halter oder die Konsole (9, 10) zur Lagerung des Verbrennungsmotors an einer der Blechschalen (1.11, 2.13) und/oder an einem der gebogenen Rohrabschnitte (2.3) angeschweißt ist.

15. Vorderachsträger nach einem der Ansprüche 1 bis 14,
**dadurch gekennzeichnet, dass** an den aus Blechschalen (1.11, 1.12, 2.11, 2.12) gebildeten Abschnitten der Längsträger Muttern angeschweißt oder Gewindebohrungen ausgebildet sind, an denen ein Versteifungs- und/oder Abschirmblech (13) angeschraubt ist.

16. Vorderachsträger für ein Kraftfahrzeug mit Tragelementen (36, 37), die Halter (37.1, 37.2, 36.1, 36.2) zur Lagerung von Radführungselementen aufweisen, und einer ein Gehäuse eines Lenkgetriebes bildenden Querstruktur (38), wobei die Tragelemente (36, 37) mit der Querstruktur (38) verbunden sind, **dadurch gekennzeichnet, dass** das jeweilige Tragelement (36, 37) aus miteinander verschweißten Blechschalen (30, 31, 32) gebildet ist, und dass die Querstruktur (38) aus einem mittleren Abschnitt der miteinander verschweißten Blechschalen (30, 33, 34) und einem aus Stahl gefertigten Lenkungsgehäuse (35) gebildet ist.

17. Vorderachsträger nach Anspruch 16,
**dadurch gekennzeichnet, dass** das Lenkungsgehäuse (35) zwischen den Blechschalen (33, 34) angeordnet ist.

## Claims

1. Front axle support for a motor vehicle having support members, which comprise holders (3, 4, 4.1, 4.2) for mounting wheel guidance members, and a transverse structure, which forms a housing of a steering gear, the support members being connected to the transverse structure, and the support members are in the form of longitudinal supports (1, 2), **characterised in that** each longitudinal support (1, 2) being formed from sheet metal shells (1.11, 1.12, 1.13, 1.14, 2.11, 2.12, 2.13, 2.14) welded together, and **in that** the transverse structure is in the form of a transverse support and is formed from a steering gear housing (5) made of steel.

2. Front axle support according to claim 1,
**characterised in that** a portion of each longitudinal support (1, 2) is formed from sheet metal shells (1.11, 1.12, 1.13, 1.14, 2.11, 2.12, 2.13, 2.14) welded together and a further portion thereof is formed from a curved tube portion (1.3, 2.3).

3. Front axle support according to either claim 1 or claim 2,
**characterised in that** the steering gear housing (5) is formed from a tubular steering rack housing (5.1), a bearing housing (5.3) which receives a ball screw, and a ball screw housing (5.4) which encloses a belt drive.

4. Front axle support according to claim 3,
**characterised in that** the steering rack housing (5.1) and the bearing housing (5.3) are welded to a motor plate (5.2) arranged between them for mounting a servo steering motor (21).

5. Front axle support according to claim 4,
**characterised in that** the motor shaft of a servo steering motor (21) mounted on the motor plate (5.2) extends parallel to the longitudinal axis of the steering gear housing (5).

6. Front axle support according to either claim 4 or claim 5,
**characterised in that** the motor plate (5.2) is connected to the steering gear housing (5.1) via a sheet metal support (5.15).

7. Front axle support according to any one of claims 3 to 6,
**characterised in that** the ball screw housing (5.4) comprises a flange (5.42), which defines a lateral mounting opening (5.41) and is provided with recesses (5.43) and nuts welded thereto for fixing a cover lid (5.5) which seals the ball screw housing (5.4).

8. Front axle support according to claim 7,
**characterised in that** the cover lid (5.5) comprises an opening having a collar-shaped formation (5.51) as a seal seat for a bellows (19).

9. Front axle support according to any one of claims 3 to 8,
**characterised in that** the bearing housing (5.3) is formed with an internal diameter which widens in steps and with an axially extending cutout (5.32).

10. Front axle support according to claim 2,
**characterised in that** each longitudinal support is provided with a mounting bush (12), which is inserted into a recess of the tube portion (1.3, 2.3) in a positive fit, at the end region of the curved tube portion (1.3, 2.3).

11. Front axle support according to claim 2,
**characterised in that** a holder (4.1) is welded to the respective tube portion (1.3, 2.3) of the longitudinal support (1, 2) and forms, together with a holder (4.2), formed on one of the sheet metal shells of the longitudinal support (1, 2), a bearing for a wheel guidance arm.

12. Front axle support according to any one of claims 1 to 11,
**characterised in that** a single-piece fork-shaped holder (3) for mounting a wheel guidance member is welded onto the portion, formed from sheet metal shells (1.11,1.12, 1.13, 1.14, 2.11, 2.12, 2.13, 2.14), of the longitudinal support (1, 2).

13. Front axle support according to any one of claims 1 to 12,
**characterised in that** a holder or a bracket (9, 10) for mounting the internal combustion engine of the motor vehicle is welded to at least one of the longitudinal supports (1, 2).

14. Front axle support according to claim 2 and claim 13,
**characterised in that** the holder or the bracket (9, 10) for mounting the internal combustion engine is welded to one of the sheet metal shells (1.11, 2.13) and/or to one of the curved tube portions (2.3).

15. Front axle support according to any one of claims 1 to 14,
**characterised in that** nuts are welded or threaded holes are formed on the portions, formed from sheet metal shells (1.11, 1.12, 2.11, 2.12), of the longitudinal supports, a reinforcing and/or shielding metal sheet (13) being screwed to said nuts or threaded holes.

16. Front axle support for a motor vehicle having support members (36, 37), which comprise holders (37.1, 37.2, 36.1, 36.2) for mounting wheel guidance members, and a transverse structure (38), which forms a housing of a steering gear, wherein the support members (36, 37) are connected to the transverse structure (38), **characterised in that** each support member (36, 37) is formed from sheet metal shells (30, 31, 32) welded together, and **in that** the transverse structure (38) is formed from a central portion of the sheet metal shells (30, 33, 34) welded together and a steering gear housing (35) made of steel.

17. Front axle support according to claim 16,
**characterised in that** the steering gear housing (35) is arranged between the sheet metal shells (33, 34).

## Revendications

1. Support d'essieu avant pour un véhicule, avec des éléments porteurs, qui présentent des supports (3, 4, 4.1, 4.2) pour le logement d'éléments de guidage de roue et une structure transversale formant un carter d'un boîtier de direction, les éléments porteurs étant reliés à la structure transversale, les éléments porteurs étant réalisés comme des longerons (1, 2), **caractérisé en ce que** le longeron respectif (1, 2) se compose de coques de tôles soudées ensemble (1.11, 1.12, 1.13, 1.14, 2.11, 2.12, 2.13, 2.14) et **en ce que** la structure transversale est réalisée comme une traverse et forme un carter de direction (5) en acier.

2. Support d'essieu avant selon la revendication 1,
**caractérisé en ce que** le longeron respectif (1, 2) est réalisé dans une section de coques de tôles soudées entre elles (1.11, 1.12, 1.13, 1.14, 2.11, 2.12, 2.13, 2.14) et dans une autre section d'une section tubulaire coudée (1.3, 2.3).

3. Support d'essieu avant selon la revendication 1 ou 2,
**caractérisé en ce que** le carter de direction (5) est formé d'un carter de crémaillère tubulaire (5.1), d'un boîtier de logement (5.3) logeant une transmission à vis à billes (5.3) et d'un carter de transmission à vis à billes (5.4) entourant un entraînement de courroie.

4. Support d'essieu selon la revendication 3,
**caractérisé en ce que** le carter de crémaillère (5.1) et le boîtier de logement (5.3) sont soudés à une plaque moteur intercalée (5.2) pour la fixation d'un moteur à direction assistée (21).

5. Support d'essieu selon la revendication 4,
**caractérisé en ce que** l'arbre moteur d'un moteur à direction assistée (21) monté sur la plaque moteur (5.2) s'étend parallèlement à l'axe longitudinal du boîtier de direction (5).

6. Support d'essieu selon la revendication 4 ou 5,
**caractérisé en ce que** la plaque moteur (5.2) est reliée par une tôle support (5,15) au carter de crémaillère (5.1).

7. Support d'essieu selon l'une des revendications 3 à 6,
**caractérisé en ce que** la transmission à vis à billes (5.4) présente une bride (5.42) définissant une ouverture de montage (5.41) latérale qui est munie d'évidements (5.43) et d'écrous soudés pour la fixation d'un couvercle de fermeture (5.5) faisant étanchéité pour la transmission à vis à billes (5.4).

8. Support d'essieu selon la revendication 7,
**caractérisé en ce que** le couvercle de fermeture (5.5) présente une ouverture avec évidement (5.51) en forme de collerette en tant que siège étanche pour un soufflet (19).

9. Support d'essieu selon l'une des revendications 3 à 8,
**caractérisé en ce que** le boîtier de logement (5.3) est réalisé avec un palier évasé en palier et une section axiale (5.32) s'étendant axialement.

10. Support d'essieu selon la revendication 2,
**caractérisé en ce que** le longeron respectif est muni à la zone d'extrémité de la section tubulaire incurvée (1.3. 2.3) d'une douille de montage (12) qui est insérée mécaniquement dans un évidement de la section tubulaire (1.3, 2.3).

11. Support d'essieu selon la revendication 2,
**caractérisé en ce qu'**un support (4.1) est soudé sur la section tubulaire respective (1.3, 2.3) du longeron (1, 2) qui forme ensemble avec un support (4.2) ménagé sur une des coques de tôles du longeron (1.2) un palier pour un guidage de roue.

12. Support d'essieu selon l'une des revendications 1 à 11,
**caractérisé en ce que** sur la section formée à partir des coques de tôles (1.11, 1.12, 1.13, 1.14, 2.11, 2.12, 2.12.14) du longeron (1, 2), un support (3) un-pièce en forme de forme fourche est soudé pour le logement d'un élément de guidage de roue.

13. Support d'essieu selon la revendication 1 à 12,
**caractérisé en ce que** sur au moins l'un des longerons (1, 2) est soudé un support ou une console (9, 10) pour le logement du moteur de combustion du véhicule.

14. Support d'essieu selon la revendication 2 et la revendication 13,
**caractérisé en ce que** le support ou la console (9, 10) pour le logement du moteur à combustion est soudé sur l'une des coques de tôle (1.11, 2.13) et/ou sur l'une des sections tubulaires coudées (2.3).

15. Support d'essieu selon l'une des revendications 1 à 14,
**caractérisé en ce que** des écrous sont soudés sur les sections formées à partir de coques de tôle (1.11, 1.12, 2.11, 2.12) des longerons, ou des perçages filetés sont formés sur lesquels est vissée une tôle de raidissement ou et/ou de blindage (13).

16. Support d'essieu pour un véhicule automobile, avec des éléments porteurs (36, 37) qui présentent des supports (37.1, 37.2. 36.1, 36.2) pour le logement d'éléments de guidage de roue et une structure transversale (38) formant un carter d'un boîtier de vitesse, les éléments porteurs (36, 37) étant reliés à la structure transversale, **caractérisé en ce que** l'élément porteur respectif (3b, 37) est formé de coques de tôle (30, 31, 32) soudées entre elles et **en ce que** la structure transversale (38) est composée d'une section médiane des coques de tôle (30, 33, 34) soudées entre elles et d'un carter de direction (35) fabriqué en acier.

17. Support d'essieu selon la revendication 16, **caractérisé en ce que** le carter de direction (35) est disposé entre les coques de tôle (33, 34).
